# EUROPEAN PATENT APPLICATION

(11) **EP 3 409 424 A1**
(43) Date of publication of application: **05.12.2018**
(21) Application number: 18174547.2
(22) Date of filing: 28.05.2018
(51) Int. Cl.: B25J 9/00

(54) **ROBOTIC-ASSISTED LOCOMOTION SYSTEM**

(30) Priority: 29.05.2017 PT 2017110109
(71) Applicant: Ekso.Teck, Lda., 4100-455 Ramalde (PT)
(72) Inventor: Ramos do Carmo, Mário Nuno, 2785-028 São Domingos de Rana (PT); Santos Ferreira, Mário Nuno, 4050-387 Porto (PT); de Macedo Alves Monteiro, Manuel Fernando, 2750-064 Cascais (PT)
(74) Representative: Ferreira, Maria Silvina

(57) **Abstract**

The present application describes a robot-assisted locomotion system developed to facilitate the locomotion of people with mobility difficulties in the lower limbs or to assist in performing repetitive strain functions.

The system is formed by a locomotion support device of the exoskeleton type, which can be coupled to the zone of the lower limbs of its user. The device has a mechanical structure that promotes said coupling, said structure including a lower back support zone with adjustable width, a back support interconnected to the lower back support and a pair of robotic legs.

## Description

### Technical field

The present application relates to a robot-assisted locomotion system.

### Summary

The present application discloses a robot-assisted locomotion system characterised by comprising:
- a mechanical structure that comprises a lower back support interconnected to a back support, a pair of robotic legs and a pair of crutches;
- a locomotion block that comprises at least four synchronous electric motors and respective electronic controllers, each operated by a local processing unit;
- a sensory block that comprises at least an accelerometer and at least a gyroscope, mounted on the back support, at least four distance sensors, at least two mounted on each end of the lower segments of a robotic leg;
- a user interface block; and
- a control block that comprises a central processing unit configured to control the at least four local processing units by processing the data retrieved by the sensory block and by the interface block.

In a particular embodiment of the system the robotic legs are segmented in an upper section and a lower section and both segments are extendable and are interconnected at knee level, and where
- the upper segment of each robotic leg is fastened to the back support and comprises a detachable articulated front support;
- the lower segment of each robotic leg comprises a foot support coupled to the lower end of said segment.

In another particular embodiment of the system a motorized base is coupled to the mechanical structure, said base comprising at least an electric motor and at least a regenerative controller.

In a particular embodiment of the system the motorized base is coupled to the mechanical structure by two connecting points present one on each foot support of the lower segment of each robotic leg.

In a particular embodiment of the system the at least two synchronous electric motors are coupled one to each upper segment of each robotic leg, and at least two synchronous electric motors are coupled one to each lower segment of each robotic leg.

In a particular embodiment of the system the electronic controllers are of the regenerative type.

In a particular embodiment of the system the sensory block comprises at least a torque sensor and at least a pressure sensor, mounted on the interconnection between the upper segment and the lower segment of each robotic leg.

In a particular embodiment of the system the interface block comprises a wrist controller, a secondary controller and a controller coupled to the grips of the crutches.

In a particular embodiment of the system the wrist controller comprises a touch-sensitive screen.

In a particular embodiment of the system the controller coupled to the grips of the crutches is of the push button type.

In a particular embodiment of the system the control block has a wireless communication module.

### General description

The present application describes a robot-assisted locomotion system, developed to facilitate the locomotion of people with mobility difficulties in the lower limbs, or to assist in performing repetitive strain functions.

### Structural technical features

The system is formed by a locomotion support device, of the exoskeleton type, which can be coupled to the zone of the lower limbs of its user. The device has a mechanical structure that promotes said coupling, said structure including a lower back support zone, with adjustable width, a back support interconnected to the lower back support, and a pair of robotic legs.

The robotic legs are segmented in an upper section and in a lower section. These segments are extendable and present front and rear lighting, being interconnected at knee level. The upper segments of each leg are fastened to the back support in an articulated way, both having a detachable articulated front support, below the knee, and a foot support coupled to the end of both lower segments.

The entire device is powered by at least a battery inside a box located at the rear of the lower back support.

The mechanical structure can be coupled to an extendable motorized base, on its width on both sides, equipped with motors and respective controllers. The power is transmitted from the battery of the locomotion device through side contacts coupled to the foot supports of the mechanical structure to two pressure pins located on the surface of the base, and there are also two driving points on the surface of the base for placing the ends of the support crutches, using the reading of these two driving points simultaneously, thereby enabling the motors to function. The entire control of the base is performed by remote drives positioned on the grips of the crutches, enabling the user to move forward and backward, turn right and left, accelerate or halt the motors.

Besides the mechanical structure, the device comprises a locomotion block, responsible for the assisted displacement of the device. The block is comprised of at least four synchronous electric motors, two of them placed on the upper segment of each leg, with the purpose of conferring rotation thereto in relation to the back support, and the other two placed at knee level of each leg, to confer rotation to the lower leg segment in relation to the upper segment. Each motor is managed by an electronic controller, and this motor is mechanically decelerated by, for example, a planetary gear, thereby allowing higher torque to be obtained for driving the second reducer stage. The option for two reducer stages provides for a reduction in the power consumption for starting the motors. Additionally, the use of regenerative-type controllers enables the deceleration movement of the motors to be utilized for generating power, improving the performance of the batteries.

The second reducer stage is comprised of a worm gear, for example, made of Bronze CB3 or Bronze CB4, and a rectified cemented spindle. These materials are used in order to reduce the friction between them, increasing their mechanical efficiency. Each rotating shaft is coupled to the worm gear by a clover-shaped fastening mechanism, thus enabling a uniform distribution of the force exerted on the rotation point of said gear.

The system equally comprises a control block responsible for its operation and external communication. The control architecture comprises a central processing unit which houses the external communication control, movement and battery monitoring algorithms, sending orders to each of the local processing units subject to the control of the inverter of each electric motor, these being responsible for managing the power and rotating positioning of the respective motor, reporting to the central processing unit. The control block also has a communication unit responsible for sending technical or clinical diagnosis data externally.

The interface with the user is provided by the interface block, in which the control block retrieves and processes the entry parameters programmed by the user. This block comprises and a wrist controller, which may comprise a touch-sensitive screen, equipped with a graphic interface with illustrative images of the functions of the device, a secondary portable controller with features identical to the wrist controller for technical use, this enabling the additional functions of modifying the speed of each of the movements, and a third controller, coupled to the grips of the crutches, in the form of push buttons, providing the user with an easy form of choosing the desired function, preventing the use of the wrist controller. All the controllers have wireless features and can be used simultaneously. The wrist controller is to be used by the patient with conventional crutches, devoid of the respective controller. In contrast, the secondary controller is a more advanced control unit, which allows for the configuration of specific parameters, such as the displacement speed. Said controllers enable the programming of stand, sit, walk, climb up and down steps, and stop functions, which will be processed by the central processing unit, jointly with the remaining information retrieved by other blocks of the system - for example sensory information - to relay the respective orders to the local processing units. They also allow for real-time monitoring of the battery charge. The controller coupled on the grips of the crutches also has the cumulative functionality to control the working of the base.

To control the intended movement of the motors, with the aim of replicating human movement of the lower limbs, the system additionally comprises a sensory block, comprised of accelerometers and gyroscopes, mounted on the back support zone, responsible for real-time measurement of the side and front variation, in degrees, of said zone. Additionally, the sensory block includes distance sensors, placed at the end of the lower segments to detect the proximity of the ground, and the front distance, so as to detect barriers, preventing the legs from hitting a potential obstacle.

Additionally, both interconnections of the upper and lower segments of each leg can be equipped with torque and pressure sensors, aiming to control the power applied to the motors in real time based on the needs of the user and/or clinical diagnosis. Each rotating shaft is equipped with an electromagnetic positioning sensor with 4096 readings at 360°, thus achieving a precise position reading of each shaft.

### System Operation

Both upper segments of each leg have their centre of rotation at their fastening point to the back assembly, formed by the back support and lower back support zone. The lower segments of each leg have their centre of rotation at the fastening of the end to the upper segment, and each point of rotation between segments is supported by two bearings. The upper segments are provided with a maximum amplitude of negative 110° and the lower segments with a maximum amplitude of positive 110°, based on the reference that 0° means both segments are in a vertical position.

During system operation, the control block receives the sensory data measured by the sensory block and processes them in the central processing unit. If, for example, it detects a cumulative side and front reading that is higher than the parameter value, the central processing unit relays the instruction to the respective local processing units to halt the motors temporarily. Both points of rotation are mechanically limited and maintain their position in the event of a power failure or system error. The device is fastened to the user by way of straps that are adjustable to the upper body level, and upper and lower segments of the legs. Once the device is fastened, the user will have access to the control and operating functions by way of the wrist controller.

In its standby status, the System is in "seated" position, the purpose being to facilitate fastening thereto by the user, the upper segments of the leg assembly being at negative 90° and the lower segments at positive 90°. When selecting the "stand" function and after a waiting period, the central processing unit instructs the local processing units to drive the motors synchronously, putting the system in a vertical position, and during the waiting period the user can abort the operation by pressing one of the buttons at the end of each grip of the crutches or the "stop" function on the wrist controller.

When selecting the "walk" function, the central processing unit resorts to the cumulative reading of the accelerometer and the gyroscope for determining the slant in the upper section of the back zone or reacts by driving the push button coupled at the end of each of the grips of the crutches, leading it to instruct the local processing units to drive the motors so as to replicate human walking. If there is no cumulative reading of the accelerometer and gyroscope in the upper section of the back zone or the push button on the grips of the crutches is not pressed, the system remains in a vertical position without driving the motors. When a cumulative reading of the back zone is detected or one of the buttons on the grips of the crutches is pressed, the motors of the segments of one of the legs are driven synchronously, recreating a step forward. Once the movement is concluded, the device waits for a new cumulative reading of the gyroscope and accelerometer or for one of the buttons on the grips of the crutches to be pressed, to drive the motors of the delayed leg segments synchronously, moving it forward, while the motors of the advanced leg segments are simultaneously driven so as to retract.

When selecting the "stop" function on the wrist controller or pressing one of the buttons on the grips of the crutches for more than a predefined time in seconds, both legs return to their vertical position.

When selecting the "climb up stairs" function, after a waiting period, the motors of the segments of one leg will be driven synchronously, raising it to the height of the step, monitoring the height thereof by distance sensors, advancing upwards. Once the movement is concluded, the motors of the segments of the raised leg are driven synchronously so as to place it in the vertical position, flexing simultaneously the lower segment of the delayed leg, placing both legs in a vertical position once the movements are concluded.

When selecting the "climb down stairs" function, after a waiting period, the motors of the segments of one leg will be driven synchronously, so as to move it forward towards the step. Thereafter, the motors of the segments of the retracted leg will be driven synchronously, flexing it, whereby placing the advanced leg in contact with the step. Once the movement is concluded, the motors of the segments of the delayed leg will be driven synchronously, flexing-it to raise it from the prior step, moving it forward and finalizing the movement by placing it in its vertical position.

When selecting the "sit" function, after a waiting period, the motors of both segments of each leg will be driven synchronously, flexing the upper segments at negative 90° and the lower segments at positive 90°.

### Summarized description of the drawings

To provide an improved understanding of the present application, drawings are attached, which represent preferred embodiments that, however, are not intended to limit the art herein disclosed.

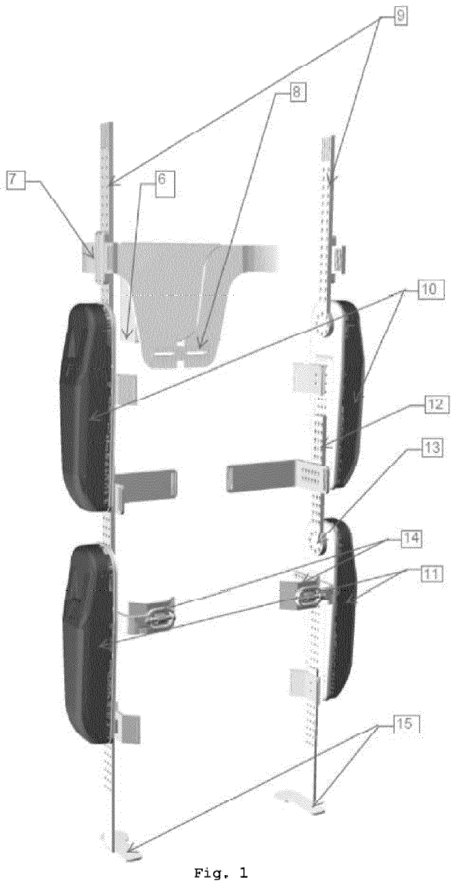

**Figure 1** illustrates an embodiment of the robot-assisted locomotion system, particularly the locomotion support device, wherein the reference numbers represent:
   6 - central processing unit;
   7 - accelerometer and gyroscope set;
   8 - lower back support zone;
   9 - back support;
   10 - upper leg segment;
   11 - lower leg segment;
   12 - lighting device;
   13 - rotating shaft of the upper and lower segments;
   14 - detachable articulated front support;
   15 - foot support.

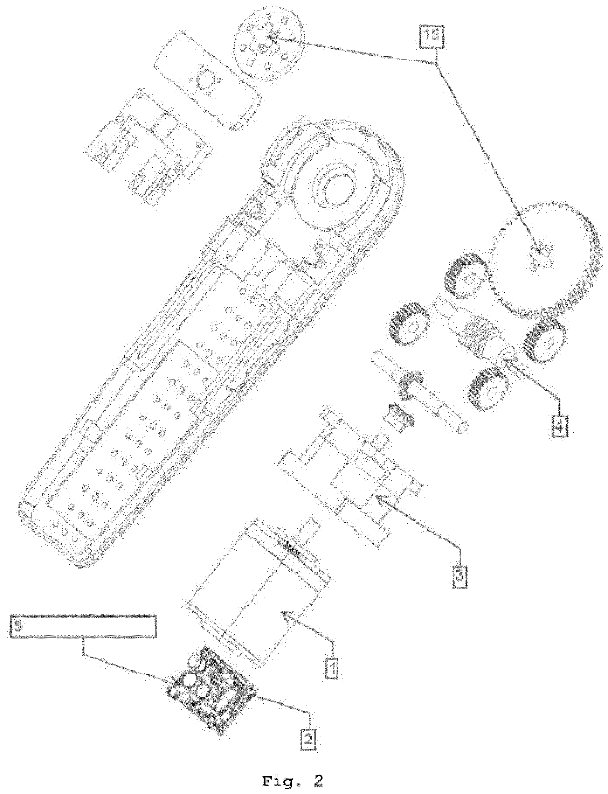

**Figure 2** illustrates an embodiment of the robot-assisted locomotion system, particularly the mechanical structure mounted on each of the upper and lower segments of each leg, wherein the reference numbers represent:
   1 - synchronous electric motor;
   2 - regenerative controller;
   3 - planetary gear;
   4 - second reducer stage;
   5 - local processing unit;
   16 - clover-shaped fastening mechanism.

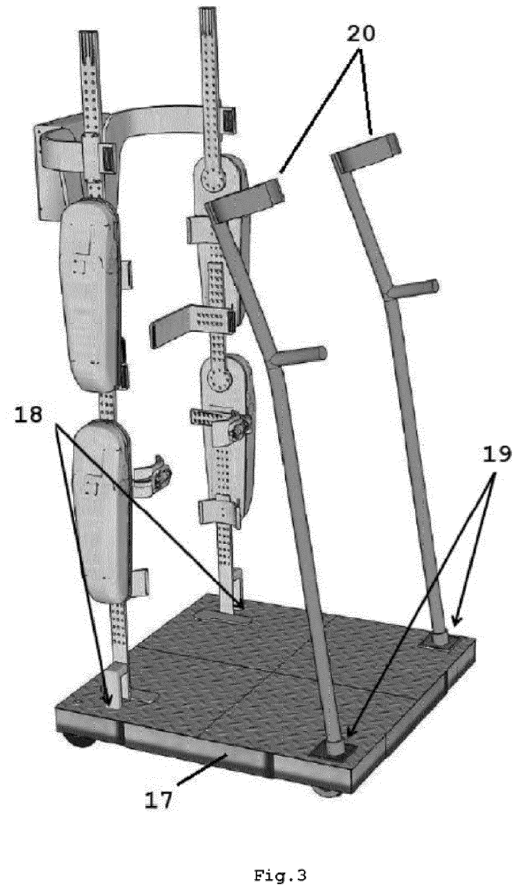

**Figure 3** illustrates an embodiment of the robot-assisted locomotion system, with the mechanical structure coupled to the motorized base, wherein the reference numbers represent:
   17 - extendable motorized base;
   18 - power conductors;
   19 - driving points;
   20 - crutches.

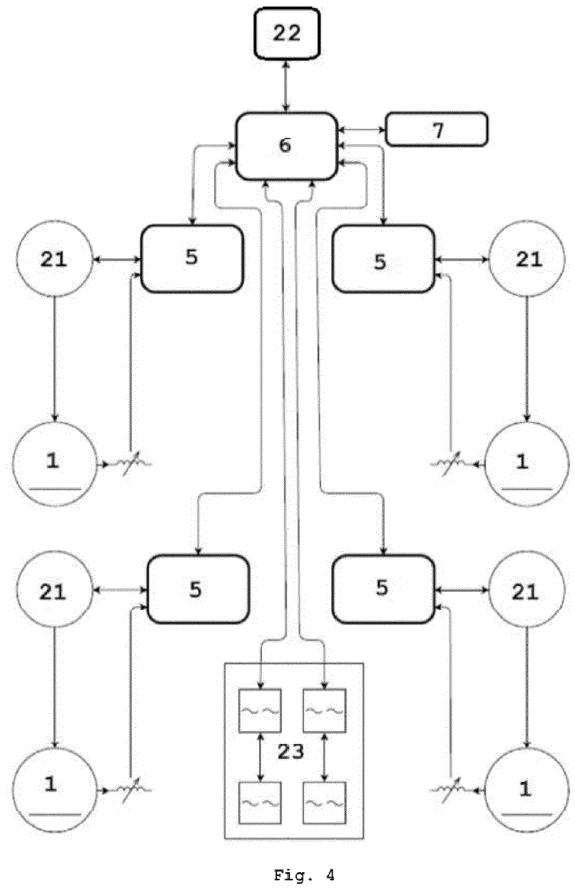

**Figure 4** illustrates the block diagram of the robot-assisted locomotion system, wherein the reference numbers represent:
   1 - synchronous electric motor;
   5 - local processing unit;
   6 - central processing unit;
   7 - accelerometer and gyroscope set;
   21 - inverter;
   22 - interface block;
   23 - sensory block.

### Description of embodiments

In reference to the drawings, certain embodiments are now described in greater detail, which are not, however, intended to limit the scope of the present application.

In a particular embodiment of the system, the device supporting the locomotion comprises four synchronous electric motors (1), managed by four regenerative controllers (2), mechanically decelerated by planetary gear (3) being coupled to a second reducer stage (4). The inverters (21) of the motors are controlled by four local processing units (5), these in turn being subordinated to a central processing unit (6). To control the intended movement of the motors (1), with the aim of replicating the human movement of the lower limbs, an accelerometer and a gyroscope (7), which are part of the sensory block (23), are used, and also the user interface block (22), which may be driven by the use of a wrist controller, a secondary and/or third controller, coupled to the grips of the crutches, all controllers being wireless. The entire device is powered by battery. The device is composed of a lower back support zone with adjustable width (8), a back support (9) and a pair of legs, which are segmented in an upper (10) and a lower (11) section, both segments extendable and having front and rear lighting (12), interconnected at knee level (13), both upper segments being coupled to the back support, a detachable articulated front support on both legs, below the knee (14), and a foot support at the end of both lower segments (15). The device is coupled to an extendable motorized base (17) in its width on both sides, equipped with two motors and two regenerative controllers. The power is transmitted from the batteries of the device to said base by power connectors (18) situated on the foot supports, and there are also two driving points (19) on the surface of the base (17) for placing the ends of the support crutches (20). The entire control of the base (17) is performed by remote drives positioned on the grips of the crutches.

Naturally, the present description is in no way restricted to the embodiments presented herein and a person with ordinary skill in the art will be able to envisage possibilities of modifying it without straying from the general idea, as defined in the claims. The preferred embodiments described above are obviously combinable together. The accompanying claims additionally define preferred embodiments.

## Claims

1. Robot-assisted locomotion system **characterised in that** it comprises:
- a mechanical structure comprising a lower back support interconnected to a back support, a pair of robotic legs and a pair of crutches;
- a locomotion block comprising at least four synchronous electric motors and respective electronic controllers, each operated by a local processing unit;
- a sensory block comprising at least an accelerometer and at least a gyroscope, mounted on the back support, at least four distance sensors, at least two mounted on each end of the lower segments of a robotic leg;
- a user interface block; and
- a control block comprising a central processing unit configured to control the at least four local processing units by processing the data retrieved by the sensory block and by the interface block.

2. System according to claim 1, **characterised in that** the robotic legs are segmented in an upper section and in a lower section, both segments extendable and interconnected at knee level, and wherein
- the upper segment of each robotic leg is fastened to the back support and comprise a detachable articulated front support;
- the lower segment of each robotic leg comprises a foot support coupled to the lower end of said segment.

3. System according to claims 1 and 2, **characterised in that** it comprises a motorized base, which can be coupled to the mechanical structure, said base comprising at least an electric motor and at least a regenerative controller.

4. System according to claim 3, **characterised in that** the motorized base is coupled to the mechanical structure by two connecting points, present one on each foot support of the lower segment of each robotic leg.

5. System according to claim 2, **characterised in that** at least two synchronous electric motors are coupled one to each upper segment of each robotic leg, and at least two synchronous electric motors are coupled one to each lower segment of each robotic leg.

6. System according to claim 1, **characterised in that** the electronic controllers are of the regenerative type.

7. System according to claim 1, **characterised in that** the sensory block comprises at least a torque sensor and at least a pressure sensor, mounted on the interconnection between the upper segment and the lower segment of each robotic leg.

8. System according to claim 1, **characterised in that** the interface block comprises a wrist controller, a secondary controller and a controller coupled to the grips of the crutches.

9. System according to claim 8, **characterised in that** the wrist controller comprises a touch-sensitive screen.

10. System according to claim 8, **characterised in that** the controller coupled to the grips of the crutches is of the push button type.

11. System according to claim 1, **characterised in that** the control block has a wireless communication module.
